(19) Europäisches Patentamt
European Patent Office
Office européen des brevets

(11) Veröffentlichungsnummer: **0 025 937**
**B1**

(12) # EUROPÄISCHE PATENTSCHRIFT

(45) Veröffentlichungstag der Patentschrift: **17.08.83**

(51) Int. Cl.³: **C 08 G 63/62**, C 08 L 69/00, C 07 D 493/04

(21) Anmeldenummer: **80105385.1**

(22) Anmeldetag: **09.09.80**

(54) **Thermoplastische Polycarbonate, Verfahren zu ihrer Herstellung, Bis-halogen-kohlensäureester von Hexahydro-furo(3,2-b) furan-3,6-diolen, sowie Polycarbonatmassen.**

(30) Priorität: **22.09.79 DE 2938464**

(43) Veröffentlichungstag der Anmeldung: **01.04.81 Patentblatt 81/13**

(45) Bekanntmachung des Hinweises auf die Patenterteilung: **17.08.83 Patentblatt 83/33**

(84) Benannte Vertragsstaaten: **DE FR GB IT NL**

(56) Entgegenhaltungen:
**GB-A-1 079 686**
**ENCYCLOPEDIA OF POLYMER SCIENCE AND TECHNOLOGY Band 10, 1969, INTERSCIENCE, New York, Seite 726**
**HOUBEN—WEYL »Methoden der organischen Chemie« Band XIV/2 1963, THIEME, Stuttgart, Seiten 53 und 54**

(73) Patentinhaber: **BAYER AG, Zentralbereich Patente, Marken und Lizenzen, D-5090 Leverkusen 1, Bayerwerk (DE)**

(72) Erfinder: **Medem, Harald, Dr., Buschstrasse 167, D-4150 Krefeld (DE)**
Erfinder: **Schreckenberg, Manfred, Dr., Dörperhofstrasse 15, D-4150 Krefeld (DE)**
Erfinder: **Dhein, Rolf, Dr., Deswatinesstrasse 30, D-4150 Krefeld (DE)**
Erfinder: **Nouvertne, Werner, Dr., Scheiblerstrasse 95, D-4150 Krefeld (DE)**
Erfinder: **Rudolph, Hans, Dr., Haydnstrasse 9, D-4150 Krefeld (DE)**

EP 0 025 937 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Thermoplastische Polycarbonate, Verfahren zu ihrer Herstellung, Bis-halogen-kohlensäureester von Hexahydro-furo(3,2-b) furan-3,6-diolen, sowie Polycarbonatmassen

Gegenstand der vorliegenden Erfindung sind hochmolekulare, thermoplastische, heterocyclisch-aromatische Copolycarbonate, die

a) 95–50 Mol-%, insbesondere 80–50 Mol-%, bezogen auf Gesamtmenge an Carbonatstruktureinheiten im Polycarbonatmolekül, Carbonatstruktureinheiten der Formel IV

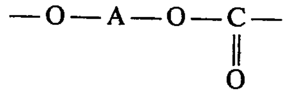

worin –O–A–O– die Reste der eingesetzten Diphenole sind, und

b) 5–50 Mol-%, insbesondere 20–50 Mol-%, bezogen auf Gesamtmenge an Carbonatstruktureinheiten im Polycarbonatmolekül, Carbonatstruktureinheiten aus Hexahydro-furo-(3,2-b)-furan-3.6-diolen gemäß Formel I

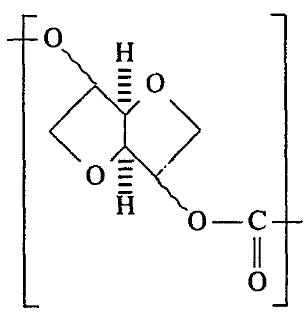

(I)

enthalten, Mischungen zweier oder mehrerer der erfindungsgemäßen Polycarbonate sowie Mischungen der erfindungsgemäßen Polycarbonate mit anderen Thermoplasten, insbesondere mit anderen Polycarbonaten auf Basis von Diphenolen.

Polycarbonate aus Diphenolen sind seit langem bekannt. Sie verfügen über eine Reihe wertvoller Eigenschaften, die sie zu einem für Industrie und Technik unentbehrlichen Werkstoff machen.

Demgegenüber konnten Polycarbonate aus aliphatischen Diolen bisher noch keine Anwendung als Konstruktionswerkstoffe finden. Ursache hierfür ist zum einen die geringere thermische Stabilität und zum anderen eine gewisse Schwierigkeit, die für gute mechanische Eigenschaften verantwortlichen hohen Molekulargewichte aufzubauen. Aliphatische Polycarbonate werden daher bisher lediglich als Oligomere technisch genutzt, beispielsweise als Diolkomponenten in der Polyurethanchemie.

Andererseits besteht für die Chemie seit jeher ein Interesse, Rohstoffe aus begrenzten Naturvorräten durch Rohstoffe aus beliebig vermehrbaren Naturvorkommen pflanzlichen Ursprungs zu ersetzen. So ist beispielsweise der Ersatz von Erdöl und der daraus erhältlichen Diphenole durch Stärke und daraus erhältliche Oligosaccharide, Hexite etc. von wirtschaftlichem Interesse. Somit steht beispielsweise Sorbit im Gegensatz zu Diphenolen in größeren Mengen zur Verfügung.

Aus der GB-PS 1 079 686 ist bekannt, daß aus den Hexahydro-furo-(3,2-b)-furan-3,6-diolen der Struktur II,

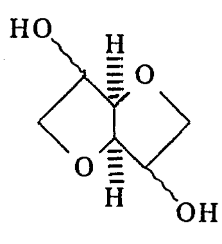

(II)

die in einfacher Weise durch Dehydratisierung von Hexiten zugänglich sind, hochmolekulare Polyester und Polycarbonate hergestellt werden können. Diese Produkte, namentlich die Polycarbonate, konnten jedoch noch keine technische Anwendung finden. Ursache ist das unbefriedigende Eigenschaftsbild. So erhält man nach dem Beispiel 5 der GB-PS 1 079 686 zwar ein hochmolekulares Polycarbonat des 1,4; 3,6-Dianhydro-D-glucit, das jedoch höherschmelzende, vernetzte Anteile enthält und aufgrund dieser inhomogenen Erscheinung nur mäßige mechanische Eigenschaften besitzt. Bei Verwendung von 1,4; 3,6-Di-anhydro-D-mannit erhält man nach diesem Verfahren nur pulvrige, kristalline Massen.

Überraschend wurde nun gefunden, daß demgegenüber heterocyclisch-aromatische Copolycarbonate, die zu 5–50 Mol-%, bezogen auf die Gesamtmolmenge an eingesetzten organischen Dihydroxyverbindungen aus heterocyclischen Diolen der Formel II und zu 50–95 Mol-%, bezogen auf die Gesamtmolmenge an eingesetzten organischen Dihydroxyverbindungen, aus Diphenolen aufgebaut sind, transparente, thermoplastische Kunststoffe sind, eine hohe Zähigkeit und hohe thermische Beständigkeit aufweisen und ihr allgemeines Eigenschaftsbild somit dem der bekannten aromatischen Polycarbonate ebenbürtig ist.

Ein bekanntes Verfahren zur Herstellung von Polycarbonaten ist die Methode der Schmelzumesterung. Um hochmolekulare Polycarbonate nach der Methode der Schmelzumesterung zu erhalten, müssen möglichst äquimolare Mengen an OH-Äquivalenten resultierend aus Diolen und Diphenolen und Acrylcarbonat- bzw. Alkylcarbonat-Äquivalenten resultierend aus den jeweils eingesetzten Carbonatspendern verwendet und bei Reaktionstemperaturen von zuletzt über 300°C umgeestert werden. Bei Mitverwendung der heterocyclischen Diole der Struktur II treten jedoch bei den erforderlichen Verweilzeiten unter diesen Bedingungen unter $CO_2$-Abspaltung Verzweigungen auf, wodurch inhomogene Produkte entstehen. Zur Herstellung der erfindungsgemäßen Copolycarbonate ist daher die Methode der Schmelzumesterung wenig geeignet.

Ein bevorzugtes Verfahren zur Herstellung von aromatischen Polycarbonaten ist das Phasengrenzflächenverfahren, siehe beispielsweise H. Schnell, Chemistry and Physics of Polycarbonates, Interscience Publishers, 1964, Seiten 33 ff, Seiten 9–14. Hierbei werden ein oder mehrere Bisphenole in wäßrig-alkalischer Lösung unter intensivem Rühren mit inerten Lösungsmitteln, wie z. B. chlorierten Kohlenwasserstoffen, durchmischt und unter Einleiten von Phosgen in hochmolekulare Polycarbonate überführt. Bei der Mitverwendung von heterocyclischen Diolen der Formel II werden jedoch keine hochmolekularen Polycarbonate erhalten. Ursache dafür sind die unterschiedlichen Reaktivitäten der aromatischen Bisphenole und heterocyclischen Diole. Zur Herstellung der erfindungsgemäßen Copolycarbonate ist daher die Methode der Phasengrenzflächenphosgenierung nicht geeignet.

Es wurde nun gefunden, daß die erfindungsgemäßen Copolycarbonate nach dem Phasengrenzflächenverfahren hergestellt werden können, wenn die Furan-3,6-diole II in Form ihrer Bishalogenkohlensäureester zur Umsetzung mit aromatischen Diphenolen gebracht werden. Wird dabei ein Anteil von mehr als 50 Mol-%, bezogen auf die Gesamtmolmenge an eingesetzten Dihydroxyverbindungen, an Diphenolen gewünscht, ist eine Mitverwendung von Phosgen oder $COBr_2$ erforderlich.

Gegenstand der vorliegenden Erfindung ist somit außerdem ein Verfahren zur Herstellung der erfindungsgemäßen Polycarbonate mit 5 bis 50 Mol-%, insbesondere 20 bis 50 Mol-%, bezogen auf Gesamtmenge an Carbonatstruktureinheiten in Polycarbonatmolekül, Carbonatstruktureinheiten der Formel I, das dadurch gekennzeichnet ist, daß man 5 bis 50 Mol-% und insbesondere 20 bis 50 Mol-%, bezogen auf Gesamtmolmenge aus Diphenolen und Bishalogenkohlensäureestern der Diole II, Diole der Formel II in Form ihrer Bis-halogenkohlensäureester mit 50 bis 95 Mol-% und insbesondere 50 bis 80 Mol-%, bezogen auf Gesamtmenge an Diphenolen und Bishalogenkohlensäureestern der Diole II, an Diphenolen, gegebenenfalls in Gegenwart von Kettenabbrechern und gegebenenfalls unter Mitverwendung von Phosgen oder $COBr_2$ bei Temperaturen zwischen 0 und 80°C, vorzugsweise zwischen 10 und 30°C nach dem Phasengrenzflächenverfahren umsetzt.

Als Bishalogenkohlensäureester sind insbesondere die Bischlorkohlensäureester geeignet.

Als geeignete Lösungsmittel für die organische Phase des Phasengrenzflächenverfahrens seien beispielsweise halogenierte Aliphaten oder halogenierte Aromaten wie $CH_2Cl_2$, 1,2-Dichloräthan, Chlorbenzol, Chlorbutane etc. genannt. Zur Herstellung der alkalischen wäßrigen Phase dient NaOH, KOH oder LiOH, vorzugsweise NaOH, wobei der pH-Wert während der Reaktion zwischen 9 und 14 liegt.

Als Katalysatoren für die Polykondensationen dienen tertiäre aliphatische Amine, beispielsweise solche mit 3 bis 20 C-Atomen, wie Triäthylamin, Tri-n-propylamin, Tri-n-butylamin, Dimethyl-benzylamin etc., quartäre aliphatische Ammoniumsalze, beispielsweise solche mit 4 bis 30 C-Atomen wie Tetramethylammoniumbromid, Tetraäthylammoniumbromid, Tetramethylammoniumchlorid, Tetraäthylammoniumbromid, Trimethyl-benzylammoniumchlorid, Trimethyl-n-butyl-ammoniumchlorid, Tetra-n-butyl-ammoniumchlorid etc., sowie quartäre Phosphoniumsalze und quartäre Ammoniumsalze.

Als Kettenabbrecher fungieren in üblicher Weise Phenole wie beispielsweise Phenol selbst, Alkylphenole wie Kresole oder tert.-Butyl-phenole, insbesondere p-Tert.-Butylphenol, sowie Halogenphenole wie p-Bromphenol, p-Chlorphenol, 2,4,6-Tribromphenol und 2,4,6-Trichlorphenol. Die Kettenabbrecher werden je nach gewünschtem Molekulargewicht der herzustellenden erfindungsgemäßen Polycarbonate in Mengen zwischen 0,1 und 6 Mol-%, bezogen auf jeweils eingesetzte Mole an Diphenolen und Bishalogenkohlensäureester der Diole II eingesetzt.

Die Reaktionsdauer kann zwischen wenigen Minuten und einigen Stunden liegen und ist im allgemeinen nach 1 bis 2 Stunden abgeschlossen.

Die Menge an $COCL_2$ oder $COBr_2$, die gegebenenfalls mitverwendet werden können, berechnet sich aus dem jeweiligen Verhältnis von OH-Endgruppen und Halogenkohlensäureesterendgruppen der Ausgangsverbindungen, wobei jeweils ein Überschuß von etwa 10 Mol-% bis etwa 50 Mol-%, vorzugsweise von etwa 10 Mol-% bis etwa 30 Mol-% zu berücksichtigen ist.

Nach beendeter Reaktion wird die Polycarbonat-haltige organische Phase mit Wasser gewaschen und eingeengt. Die Isolierung der Produkte kann erfolgen, indem man die Polycarbonate mit einem

Nicht-Lösungsmittel, wie beispielsweise Aceton, Methanol oder Petroläther, ausfällt. Bevorzugt werden jedoch die konzentrierten Polycarbonat-Lösungen im Schneckenverdampfer überführt und in bekannter Weise extrudiert. Die Ausbeuten an erfindungsgemäßem Polycarbonat sind praktisch quantitativ.

Ein weiteres Verfahren zur Herstellung der erfindungsgemäßen Polycarbonate besteht in der Umsetzung der Bishalogenkohlensäureester der Furan-3,6-Diole II mit aromatischen Diphenolen in homogener Lösung.

Hierbei werden die einzusetzenden aromatischen Dihydroxyverbindungen und gegebenenfalls Kettenbegrenzer unter Zusatz einer äquivalenten Menge einer tertiären organischen Base wie beispielsweise N,N-Dimethylanilin, Dimethylcyclohexylamin oder vorzugsweise Pyridin in einem der oben für das Phasengrenzflächenverfahren genannten organischen Lösungsmittel wie beispielsweise $CH_2Cl_2$ oder Chlorbenzol gelöst, und mit entsprechenden Mengen an Bis-halogenkohlensäureestern der Diole II umgesetzt.

Wird dabei ein Anteil von mehr als 50 Mol-%, bezogen auf die Gesamtmolmenge an eingesetzten Dihydroxyverbindungen, an Diphenolen gewünscht, ist eine Mitverwendung von Phosgen oder $COBr_2$ erforderlich.

Die Reaktionstemperaturen liegen zwischen −10 und +120°C, die Reaktionszeiten etwa bei einer halben bis 12 Stunden. Die Aufarbeitung der Polycarbonatlösungen erfolgt in der Weise, daß man das ausgefallene Salz der organischen Base durch Filtrieren abtrennt oder durch Zugabe eines Lösungsmittels wie z. B. Wasser in Lösung bringt. Die polycarbonathaltige organische Phase wird mit Wasser gewaschen und eingeengt. Die Ioslierung der Produkte kann in gleicher Weise, wie oben für das Phasengrenzflächenverfahren beschrieben, erfolgen.

Gegenstand der vorliegenden Erfindung ist somit auch ein Verfahren zur Herstellung der erfindungsgemäßen Polycarbonate, das dadurch gekennzeichnet ist, daß man 5−50 Mol-% und insbesondere 20−50 Mol-%, bezogen auf Gesamtmolmenge aus Diphenolen und Bishalogenkohlensäureestern der Diole II, Diole der Formel II in Form ihrer Bis-halogenkohlensäureester mit 50−95 Mol-% und insbesondere 50−80 Mol-%, bezogen auf Gesamtmolmenge an Diphenolen und Bishalogenkohlensäureestern der Diole II, an Diphenolen, ggf. in Gegenwart von Kettenabbrechern und gegebenenfalls unter Mitverwendung von Phosgen oder $COBr_2$ in homogener Lösung unter Zusatz von mindestens äquivalenten Mengen an tertiären organischen Basen, vorzugsweise von Pyridin umsetzt.

Als Bis-halogenkohlensäureester sind insbesondere die Bis-chlorkohlensäureester geeignet. Die Menge an jeweils einzusetzendem Phosgen liegt zwischen 0 und 150 Mol-%. Die Reaktionstemperaturen liegen zwischen −10 und +120°C.

Für die erfindungsgemäßen Polycarbonate bevorzugt einzusetzende Diole der Formel II sind

(3aR)-(3ar,6ac)-Hexahydro-furo-(3,2-b)-furan-3c,6t-diol,
1,4;3,6-Dianhydro-D-glucit, IIa,
(3aR)-(3ar,6ac)-Hexahydro-furo(3,2-b)-furan-3t,6t-diol,
1,4;3,6-Dianhydro-D-annit, IIb,
(3aS)-(3ar,6ac)-Hexahydro-furo-(3,2-b)-furan-3c,6c-diol,
1,4;3,6-Dianhydro-D-idit, IIc,
(3aR)-(3ar,6ac)-Hexahydro-furo(3,2-b)-furan-3c,6c-diol,
1,4;3,6-Dianhydro-L-idit, IId.

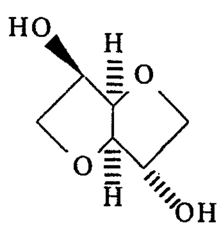 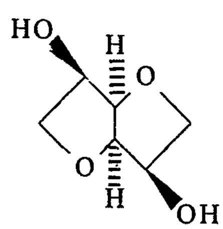 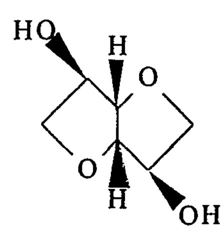 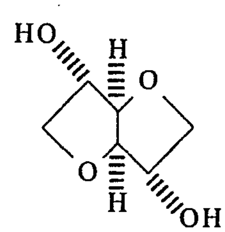

IIa IIb IIc IId

Erfindungsgemäß besonders bevorzugt ist das Diol der Formel IIa.

Die erfindungsgemäß verwendbaren Diole sind literaturbekannt und in einfacher Weise, zumeist durch Behandlung mit Säuren, aus den entsprechenden Hexiten zugänglich. Mehrere Methoden für ihre Darstellung werden in »Beilsteins Handbuch der organischen Chemie«, 3. und 4. Ergänzungswerk, Band 19/2, S. 989 ff., zitiert.

Zur Herstellung der erfindungsgemäßen Polycarbonate sind grundsätzlich beliebige Diphenole geeignet, bevorzugt die der folgenden Formel III

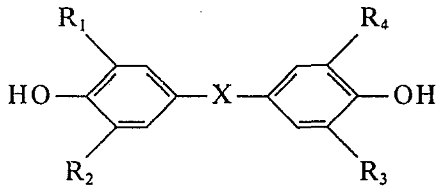

(III)

worin

X $C_1-C_6$-Alkylen, $C_2-C_6$-Alkyliden, $C_6-C_{10}$-Cycloalkylen, $C_6-C_{10}$-Cycloalkyliden,

$-\underset{|}{C}H$-Aryl wie $-\underset{|}{C}H-C_6H_5$, $-\underset{|}{C}(Aryl)_2$ wie $-\underset{|}{C}(C_6H_5)_2$, $-\underset{\underset{O}{\|}}{C}-$, $-S-$,

$-SO-$, $-SO_2-$, $-O-$,

eine direkte Bindung und

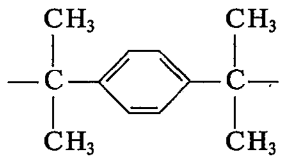

$R_1$ bis $R_4$ gleich oder verschieden sind und H, $CH_3$, $C_2H_5$, $O-CH_3$, Cl oder Br

bedeuten.

Erfindungsgemäß geeignete Diphenole sind beispielsweise

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-äther
Bis-(hydroxyphenyl)-ketone
Bis-(hydroxyphenyl)-sulfoxide
Bis-(hydroxyphenyl)-sulfone
$\alpha,\alpha'$-bis-(hydroxyphenyl-diisopropylbenzole

sowie deren kernalkylierte und kernhalogenierte Verbindungen. Diese und weitere geeignete Diphenole sind z. B. in den US-Patentschriften 3 028 365, 3 275 601, 3 148 172, 2 999 835, 2 991 273, 3 271 367, 3 062 781, 2 970 131 und 2 999 846, in den deutschen Offenlegungsschriften 1 570 703, 2 063 050, 2 063 052, 2 211 956, 2 211 957, der FR-PS 1 561 518 und in der Monographie »H. Schnell, Chemistry and Physics of Polycarbonates, Interscience Publishers, New York, 1964«, beschrieben.

Bevorzugte Diphenole sind z. B.:

4,4'-Dihydroxydiphenyl
2,2-Bis-(4-hydroxyphenyl)-propan, Bisphenol A
2,4-Bis-(4-hydroxyphenyl)-2-methylbutan
1,1-Bis-(4-hydroxyphenyl)-cyclohexan
$\alpha,\alpha$-Bis-(4-hydroxyphenyl)-p-diisopropylbenzol
2,2-Bis-(3-methyl-4-hydroxyphenyl)-propan
2,2-Bis-(3-chlor-4-hydroxyphenyl)-propan
Bis-(3,5-dimethyl-4-hydroxyphenyl)-methan
2,2-Bis-(3,5-dimethyl-4-hydroxyphenyl)-propan
Bis-(3,5-Dimethyl-4-hydroxyphenyl)-sulfon
2,4-Bis-(dimethyl-4-hydroxyphenyl)-2-methylbutan
1,1-Bis-(3,5-dimethyl-4-hydroxyphenyl)-cyclohexan
$\alpha,\alpha$-Bis-(3,5-dimethyl-4-hydroxyphenyl)-p-diisopropylbenzol
2,2-Bis-(3,5-dichlor-4-hydroxyphenyl)-propan
2,2-Bis-(3,5-dibrom-4-hydroxyphenyl)-propan.

Besonders bevorzugte Diphenole sind z. B.:

2,2-Bis-(4-hydroxyphenyl)-propan (Bisphenol A)
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis-(4-hydroxyphenyl)-cyclohexan.

Die erfindungsgemäßen Polycarbonate enthalten somit Carbonatstruktureinheiten der Formel IV

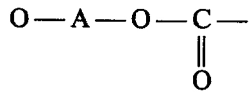

(IV)

worin $-O-A-O-$ die Reste der eingesetzten Diphenole sind.

Erfindungsgemäß bevorzugte Copolycarbonate sind solche aus den bevorzugten Furan-3,6-diolen IIa bis IId und einem oder mehreren der bevorzugten Diphenole der Formel III.

Besonders bevorzugte Copolycarbonate sind die aus 1,4;3,6-dianhydro-D-glucit und 2,2-Bis-(4-hydroxyphenyl)-propan.

Die für die Herstellung der erfindungsgemäßen Polycarbonate nach dem Phasengrenzflächenverfahren geeigneten Bischlorkohlensäureester beziehungsweise Bisbromkohlensäureester der Diole II der Formel V

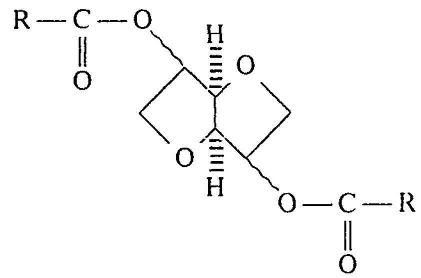

R = Cl, Br

(V)

sind neu und können nach bekannten Methoden aus den Diolen der Formel II mit überschüssigem Phosgen beziehungsweise $COBr_2$, vorzugsweise in Gegenwart von inerten Basen wie beispielsweise tertiären aliphatischen Aminen oder tertiären aliphatisch aromatischen Aminen wie etwa Triäthylamin oder Dimethylanilin und gegebenenfalls in Gegenwart eines inerten organischen Lösungsmittels, wie beispielsweise aliphatischen Halogenkohlenwasserstoffen wie $CH_2Cl_2$ oder 1,2-Dichloräthan, erhalten werden. Die Aufarbeitung der Reaktionslösung erfolgt, indem man durch Zugabe von Wasser das restliche Phosgen beziehungsweise $COBr_2$ zersetzt, durch Waschen mit salzsaurem Wasser die Amine entfernt und anschließend mit destilliertem Wasser wäscht und die organische Phase trocknet. Die erfindungsgemäßen Bischlorkohlensäureester beziehungsweise Bisbromkohlensäureester können dann in bekanter Weise, beispielsweise durch Vakuumdestillation, in reiner Form isoliert werden.

Gegenstand der vorliegenden Erfindung sind somit auch Bishalogenkohlensäureester von Hexahydro-furo-(3.2-b)-furan-3.6-diolen der Formel V, worin R Cl oder Br ist.

Die erfindungsgemäßen Polycarbonate können in bekannter Weise durch den Einbau geringer Mengen, vorzugsweise von 0,05 bis 2,0 Mol-%, bezogen auf jeweils eingesetzte organische Dihydroxyverbindungen, an Verzweigern modifiziert werden.

Als Verzweiger eignen sich beispielsweise drei- oder mehr als dreifunktionelle Verbindungen wie beispielsweise solche mit 3 oder mehr als 3 phenolischen Hydroxylgruppen oder Isatinbisphenole gemäß der DE-AS 2 500 092 wie beispielsweise 3,3-Bis-(4-hydroxyphenyl)-2-oxo-2,3-dihydroindol oder 3,3-Bis-(4-hydroxy-3-methylphenyl)-2-oxo-2,3-dihydroindol.

Die erfindungsgemäßen Polycarbonate sollen in der Regel mittlere Gewichtsmittel-Molekulargewichte $\overline{M}_w$ von 10 000 bis über 200 000, vorzugsweise 20 000 bis 80 000 haben, ermittelt durch Messungen der rel. Viskosität in $CH_2Cl_2$ bei 25° C und einer Konzentration von 0,5 Gew.-%.

Den erfindungsgemäßen Polycarbonaten können während oder nach ihrer Herstellung die in der Polycarbonatchemie üblichen Stabilisatoren gegen Hitze, UV-Licht, und Oxidation zugesetzt werden. Es können ihnen die für Polycarbonate üblichen Entformungsmittel und Flammschutzmittel zugesetzt werden.

Die erfindungsgemäßen heterocyclischen-aromatischen Copolycarbonate zeichnen sich aus durch sehr gute mechanische, thermische und dielektrische Eigenschaften, sind beständig gegen viele chemische Agenzien und sind klar transparent. Von besonderem Wert ist ihre hohe thermische Beständigkeit und hohe Einfriertemperatur, die in einigen Fällen sogar die des bekannten Bisphenol-A-Polycarbonats übertrifft. So beträgt die Einfriertemperatur eines erfindungsgemäßen Copolycarbonates aus 50 Mol-% Bisphenol A und 50 Mol-% 1,4-3,6-Dianhydro-D-glucit IIa 162° C,

wogegen die eines reinen Bisphenol-A-Polycarbonats nur 151°C beträgt, jeweils bestimmt an Proben einer Lösungsviskosität $\eta_{rel} = 1,30$ bei einer Heizrate von 20°K/Min.

Die genannten thermoplastischen Polycarbonate finden spezielle Verwendung als Konstruktionswerkstoffe für verschiedene Anwendungszwecke, wie z. B. Maschinenteile, Automobilteile, Gehäuse, Gefäße und elektrische Teile. Sie können durch allgemeine Verformungsmethoden, z. B. durch Spritzgießen, Extrusionsverformen und Preßverformen verarbeitet werden. Weiterhin können aufgrund der guten Löslichkeit in Chlorkohlenwasserstoffen, z. B. Methylenchlorid, über das Gießverfahren Folien hergestellt werden, die sowohl als Elektroisolerfolien als auch als Trägerfolien verwendet werden können.

Den erfindungsgemäßen Polycarbonaten können außerdem Farbstoffe, Pigmente, Füllstoffe und anorganische und organische Fasern wie beispielsweise Glasfasern in den für Polycarbonate üblichen Mengen eingearbeitet werden.

Den erfindungsgemäßen Polycarbonaten können außerdem andere Thermoplasten, wie etwa ABS, thermoplastische Polyester und insbesondere jedoch andere thermoplastische Polycarbonate auf Basis von Diphenolen in beliebigen Mengen zugemischt werden, vorzugsweise in Mengen bis zu etwa 50 Gew.-%, bezogen auf Gesamtgewicht aus erfindungsgemäßen Polycarbonaten und anderen Thermoplasten, um das Eigenschaftsbild der erfindungsgemäßen Polycarbonate noch zu modifizieren.

## Vergleichsbeispiel 1

Hierzu wird das Beispiel 5 der GB-PS 1 079 686 nachgearbeitet.

| | |
|---|---|
| 14,6 g (0,1 Mol) | 1,4;3,6-Dianhydro-D-glucit, IIa |
| 21,4 g (0,1 Mol) | Diphenylcarbonat |

werden unter $N_2$ bei 220°C aufgeschmolzen. 18,8 g Phenol werden abdestilliert, anschließend wird noch 30 min bei 1,333 m bar (1 mm Hg) nachgerührt.

Das erhaltene Polycarbonat ist blaßbraun und im wesentlichen transparent, enthält aber dunkelbraune Einschlüsse und läßt sich durch Druck mit den Händen auseinanderbrechen. Die Lösungsviskosität $\eta_{rel}$ (0,5 g in 100 ml $CH_2Cl_2$ bei 25°) beträgt 1,186 (nach Abtrennen unlöslicher Bestandteile).

## Vergleichsbeispiel 2

Das Vergleichsbeispiel 1 wird wiederholt, indem 14,6 g (0,1 Mol) 1,4;3,6-Dianhydro-D-mannit, IIb zur Reaktion gebracht werden. Nach wenigen Minuten, noch bevor die theoretisch berechnete Phenolmenge abdestilliert worden ist, setzt sich eine graubraune Masse ab, die nicht mehr aufgeschmolzen werden kann, ohne daß Zersetzung eintritt. Das Produkt ist intransparent, unlöslich in den meisten organischen Lösungsmitteln und außerordentlich spröde.

Durch die Vergleichsbeispiele 1 und 2 wird somit gezeigt, daß Homopolycarbonate aus den Furan-3,6-diolen II als thermoplastische Werkstoffe nicht geeignet sind.

## Vergleichsbeispiel 3

In 600 ml Wasser werden unter $N_2$ gelöst:

| | |
|---|---|
| 20,0 g (0,5 Mol) | NaOH, |
| 22,8 g (0,1 Mol) | Bisphenol A, |
| 14,6 g (0,1 Mol) | 1,4;3,6-Dianhydro-D-glucit. |

Nach Zugabe von 600 ml $CH_2Cl_2$ werden unter intensivem Rühren 30 g (0,3 Mol) Phosgen eingeleitet. Die wäßrige Phase ist bisphenolatfrei. Es werden 3 ml einer 3%igen Triäthylamin-Lösung zugegeben und 60 Minuten nachgerührt. Die organische Phase wird abgetrennt, mit 100 ml 5%iger Phosphorsäure geschüttelt und mit destilliertem Wasser elektrolytfrei gewaschen. Die Lösung wird eingedampft. Man erhält 23 g farbloses Polycarbonat mit $\eta_{rel} = 1,19$. Durch IR- und NMR-spektroskopische Untersuchungen wird jedoch gefunden, daß es sich um ein reines Bisphenol A-Polycarbonat handelt.

Durch Vergleichsbeispiel 3 wird somit gezeigt, daß Copolycarbonate aus den heterocyclischen Diolen II und aromatischen Bisphenolen nach dem Verfahren der Zweiphasengrenzflächenphosgenierung nicht hergestellt werden können.

## Beispiel 1

### Bischlorkohlensäureester von 1,4;3,6-Dianhydro-D-glucit

43,8 g (0,3 Mol) 1,4;3,6-Dianhydro-D-glucit werden bei 0° C als Suspension in 400 ml Methylenchlorid vorgelegt. Es werden 89,5 g (0,9 Mol) Phosgen eingeleitet. Innerhalb von 30 Minuten wird eine Lösung von 76,2 g (0,63 Mol) Dimethylanilin in 100 ml Methylenchlorid bei 0±2° C zugetropft. Es wird 2 Stunden bei 25° C nachgerührt, danach durch Zugabe von Wasser das überschüssige Phosgen zersetzt. Es wird mit salzsaurem Wasser, dann mehrfach mit dest. Wasser gewaschen und getrocknet. Das Methylenchlorid wird abgedampft, der Rückstand wird im Hochvakuum destilliert. Man erhält 70 g (86,1% Ausbeute) farbloses Öl mit einem Siedepunkt von 134° C/1,07 m bar. Das Öl erstarrt zu farblosen Kristallen vom Schmelzpunkt 44°.

| | | |
|---|---|---|
| Analyse: | Cl | gef. 25,9% |
| | | ber. 26,2% |

## Beispiel 2

### Bischlorkohlensäureester von 1,4;3,6-Dianhydro-D-mannit

1,4;3,6-Dianhydro-D-mannit wird in gleicher Weise wie in Beispiel 1 beschrieben umgesetzt. Man erhält 64 g (78,6%) farbloses Öl mit einem Siedepunkt von 155° C/1,33 mbar.

| | | |
|---|---|---|
| Analyse: | Cl | gef. 26,3% |
| | | ber. 26,2% |

## Beispiel 3

### Copolycarbonat aus 1,4;3,6-Dianhydro-D-glucit und Bisphenol A

In 500 ml Wasser werden unter $N_2$ gelöst:

| | |
|---|---|
| 20 g (0,5 Mol) | NaOH, |
| 22,8 g (0,1 Mol) | Bisphenol A, |
| 300 mg (0,002 Mol) | p-tert.-Butylphenol und |
| 322 mg (0,001 Mol) | Tetrabutylammoniumbromid. |

Nach Zugabe von 500 ml $CH_2Cl_2$ wird unter kräftigem Rühren eine Lösung von 27,1 g (0,1 Mol) Bischlorkohlensäureester von 1,4;3,6-Dianhydro-D-glucit in 100 ml $CH_2Cl_2$ bei Raumtemperatur zugetropft. Es wird 60 Minuten nachgerührt. Die organische Phase wird abgetrennt, mit 100 ml 5%iger Phosphorsäure geschüttelt, sodann durch wiederholtes Schütteln mit destilliertem Wasser elektrolytfrei gewaschen. Die Lösung wird eingedampft. Man erhält 38 g farbloses, klares Polycarbonat mit $\eta_{rel}=1{,}301$.

Die Einfriertemperatur $E_T$ (bestimmt mit einem Differentialthermoanalysator bei einer Heizrate von 20° K/Min.) beträgt 162° C.

## Beispiel 4

### Copolycarbonat aus 1,4;3,6-Dianhydro-D-mannit und Bisphenol A

Das Beispiel 3 wird wiederholt, indem 27,1 g (0,1 Mol) Bischlorkohlensäureester von 1,4;3,6-Dianhydro-D-mannit eingesetzt werden.

Das erhaltene Copolycarbonat ist farblos, klar, besitzt eine $\eta_{rel}=1{,}284$ und eine Einfriertemperatur $E_T=133°$ C.

## Beispiel 5

### Copolycarbonat aus 1,4;3,6-Dianhydro-D-glucit und 1,1-Bis-(4-hydroxyphenyl)-cyclohexan

Das Beispiel 3 wird wiederholt, indem 26,8 g (0,1 Mol) 1,1-Bis-(4-hydroxyphenyl)-cyclohexan eingesetzt werden. Das erhaltene Copolycarbonat ist farblos, klar, besitzt eine $\eta_{rel}=1{,}265$ und eine Einfriertemperatur $E_T=176°$.

Beispiel 6

Copolycarbonat aus 1,4;3,6-Dianhydro-D-glucit und 4,4'-Dihydroxydiphenylsulfid (Bisphenol S)

Das Beispiel 3 wird wiederholt, indem 21,8 g (0,1 Mol) 4,4'-Dihydroxydiphenylsulfid eingesetzt werden. Das erhaltene Copolycarbonat ist farblos, klar, besitzt eine $\eta_{rel} = 1{,}259$ und eine Einfriertemperatur $E_T = 132°$.

Beispiel 7

Copolycarbonat aus 1,4;3,6-Dianhydro-D-glucit und Bisphenol A

In 40 l $H_2O$ werden gelöst: 3000 g (75 Mol) NaOH, 3192 g (14 Mol) Bisphenol A, 42 g (0,28 Mol) p-tert.-Butylphenol. Nach Zugabe von 40 l $CH_2Cl_2$ wird unter intensicem Rühren bei 20° C eine Lösung von 271 g (1,0 Mol) Bischlorkohlensäureester von 1,4;3,6-Dianhydro-D-glucit in 500 ml $CH_2Cl_2$ zugetropft. Es wird 10 Minuten nachgerührt. Sodann werden 1980 g (20 Mol) Phosgen eingeleitet. Die wäßrige Phase ist bisphenolatfrei. Es werden 15 g Triäthylamin zugesetzt und 60 Minuten nachgerührt. Die wäßrige Phase wird abgetrennt, die organische Phase wird mit 2%iger Phosphorsäure angesäuert und anschließend mit destilliertem Wasser elektrolytfrei gewaschen. Es werden 7 kg Chlorbenzol zugesetzt. Die Lösung wird eingeengt und in einen Vakuumextruder überführt. Durch Extrusion bei 270° erhält man 3,2 kg klares, farbloses Granulat mit $\eta_{rel} = 1{,}315$. Durch NMR-Spektroskopie wird ein Molverhältnis A : 1,4;3,6-Dianhydro-D-glucit = 14 : 1 nachgewiesen. An Prüfstäben aus diesem Produkt wurden folgende Werte ermittelt:

| | |
|---|---|
| Vicat B: | 148° |
| Schlagzähigkeit: | nicht gebrochen |
| Kerbschlagzähigkeit: | 36,9 kJ/$m^2$ |
| Reißfestigkeit: | 56,3 MPa |
| Reißdehnung: | 84% |
| Streckspannung: | 65,1 MPa |

Beispiel 8

Copolycarbonat aus 1,4;3,6-Dianhydro-D-glucit und Bisphenol A

In 400 ml $CH_2Cl_2$ werden unter $N_2$ gelöst:

| | |
|---|---|
| 22,8 g (0,1 Mol) | Bisphenol A, |
| 23,7 g (0,3 Mol) | Pyridin und |
| 150 mg (0,001 Mol) | p-tert.-Butylphenol. |

Innerhalb von 30 min wird bei +2° C eine Lösung von 27,1 g (0,1 Mol) Bischlorkohlensäureester von 1,4;3,6-Dianhydro-D-glucit in 100 ml $CH_2Cl_2$ zugetropft. Es wird 3 Std. bei 0 bis +5° C nachgerührt. Nach Filtrieren wird die organ. Phase mit verd. HCl, sodann mit dest. Wasser elektrolyfrei gewaschen. Die Lösung wird in Methanol eingetropft. Man erhält 36 g helles Polycarbonatpulver mit $\eta_{rel} = 1{,}231$.

**Patentansprüche**

1. Hochmolekulare, thermoplastische, heterocyclisch-aromatische Copolycarbonate, die

a) 95–50 Mol-%, bezogen auf Gesamtmenge an Carbonatstruktureinheiten im Polycarbonatmolekül, Carbonatstruktureinheiten der Formel IV

$$-O-A-O-\underset{\underset{O}{\|}}{C}-$$

worin –O–A–O– die Reste der eingesetzten Diphenole sind, und

b) 5–50 Mol-%, bezogen auf Gesamtmenge an Carbonatstruktureinheiten im Polycarbonatmolekül, Carbonatstruktureinheiten aus Hexahydro-furo-(3,2-b)-furan-3.6-diolen gemäß Formel I

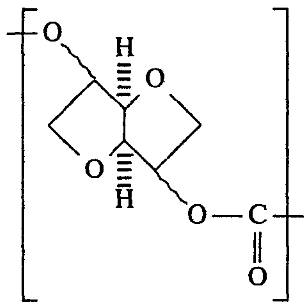

(I)

enthalten.

2. Verfahren zur Herstellung der Copolycarbonate des Anspruchs 1, dadurch gekennzeichnet, daß man 5 bis 50 Mol-%, bezogen auf Gesamtmolmenge aus Diphenolen und Bishalogenkohlensäureestern der Diole II,

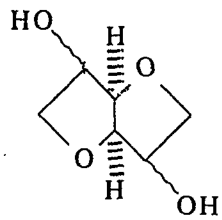

(II)

Diole der Formel II in Form ihrer Bishalogenkohlensäureester mit 50–95 Mol-%, bezogen auf Gesamtmolmenge aus Diphenolen und Bishalogenkohlensäureestern der Diole II, an Diphenolen, gegebenenfalls in Gegenwart von Kettenabbrechern und gegebenenfalls unter Mitverwendung von Phosgen oder $COBr_2$ bei Temperaturen zwischen 0° C und 80° C nach dem Phasengrenzflächenverfahren umsetzt.

3. Verfahren zur Herstellung der Copolycarbonate des Anspruchs 1, dadurch gekennzeichnet, daß man 5 bis 50 Mol-%, bezogen auf Gesamtmolmenge aus Diphenolen und Bishalogenkohlensäureestern der Diole II,

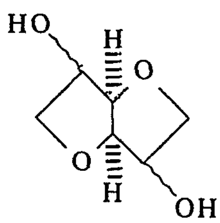

(II)

Diole der Formel II in Form ihrer Bishalogenkohlensäureester mit 50–95 Mol-%, bezogen auf Gesamtmolmenge aus Diphenolen und Bishalogenkohlensäureestern der Diole II, an Diphenolen, gegebenenfalls in Gegenwart von Kettenabbrechern und gegebenenfalls unter Mitverwendung von Phosgen oder $COBr_2$ bei Temperaturen zwischen −10° und +120° in homogener Lösung unter Zusatz von mindestens äquivalenten Mengen an tertiären organischen Basen umsetzt.

4. Bishalogenkohlensäureester von Hexahydro-furo-(3.2-b)-furan-3.6-diolen der Formel V,

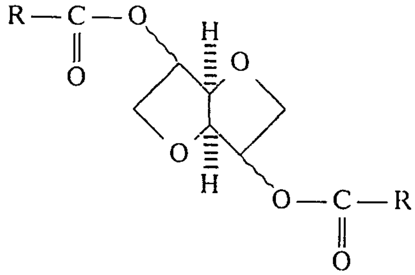

(V)

worin R Cl oder Br ist.

5. Abmischungen aus Copolycarbonaten des Anspruchs 1 mit anderen Thermoplasten.

6. Abmischungen aus Copolycarbonaten des Anspruchs 1 mit anderen Polycarbonaten.

**Claims**

1. High molecular weight, thermoplastic heterocyclic-aromatic copolycarbonates containing

a) from 95 to 50 mole percent, based on the total of carbonate structural units in the polycarbonate molecule, of carbonate structural units corresponding to formula IV

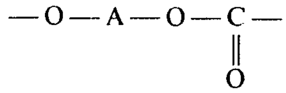

in which $-O-A-O-$ are the residues of the diphenols used and

b) from 5 to 50 mole percent, based on the total of carbonate structural units in the polycarbonate molecule, of carbonate structural units of hexahydrofuro-(3,2-b)-furan-3,6-diols corresponding to formula I

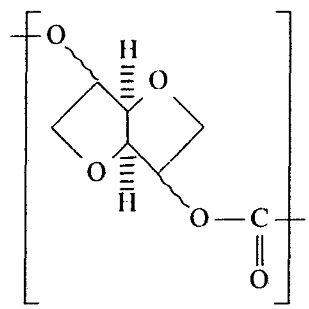

(I)

2. A process for producing the copolycarbonates claimed in Claim 1, characterised in that from 5 to 50 mole percent, based on the total molar quantity of diphenols and bis-halogen carbonic acid esters of the diols of formula II

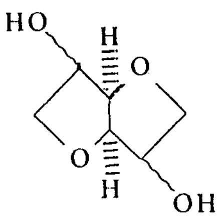

(II)

of diols corresponding to formula II in the form of their bis-halogen carbonic acid esters are reacted with from 50 to 95 mole percent, based on the total molar quantity of diphenols and bis-halogen carbonic acid esters of the diols of formula II, of diphenols by the phase-interface process at temperatures in the range from 0°C to 80°C optionally in the presence of chain terminators and optionally using phosgene or $COBr_2$.

3. A process for producing the copolycarbonates claimed in Claim 1, characterised in that from 5 to 50 mole percent, based on the total molar quantity of diphenols and bis-halogen carbonic acid esters of the diols of formula II

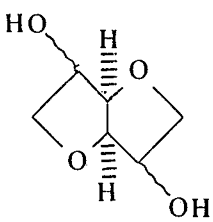

(II)

of diols corresponding to formula II in the form of their bis-halogen carbonic acid esters are reacted with from 50 to 95 mole percent, based on the total molar quantity of diphenols and bis-halogen carbonic acid esters of the diols of formula II, of diphenols at temperatures in the range from −10 to +120°C in homogeneous solution using at least equivalent quantities of tertiary organic bases, the reaction optionally being carried out in the presence of chain terminators and optionally using phosgene or $COBr_2$.

4. Bis-halogen carbonic acid esters of hexahydrofuro-(3,2-b)-furan-3,6-diols corresponding to the following formula

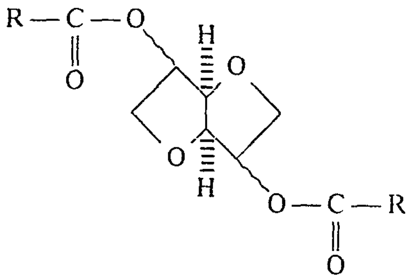

(V)

in which R represents Cl or Br.

5. Mixtures of copolycarbonates of the type claimed in Claim 1 with other thermoplasts.

6. Mixtures of copolycarbonates of the type claimed in Claim 1 with other polycarbonates.

**Revendications**

1. Copolycarbonates hétérocyclo-aromatiques thermoplastiques de haut poids moléculaire, qui contiennent

a) 95–50 moles-%, par rapport à la quantité totale de motifs structuraux carbonate dans la molécule de polycarbonate, de motifs structuraux carbonate de formule IV

$$-O-A-O-\underset{\underset{\displaystyle O}{\|}}{C}-$$

dans laquelle $-O-A-O-$ désigne les restes des diphénols utilisés, et

b) 5–50 moles-%, par rapport à la quantité totale de motifs structuraux carbonate dans la molécule de polycarbonate, de motifs structuraux carbonate dérivés d'hexahydrofuro-(3,2-b)-furanne-3.6-diols de formule I

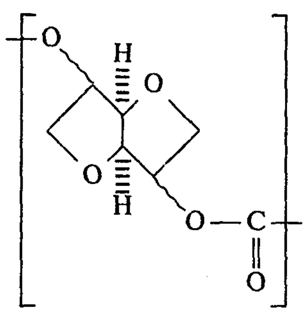

(I)

2. Procédé de production des copolycarbonates suivant la revendication 1, caractérisé en ce qu'on fait réagir 5 à 50 moles-%, par rapport à la quantité molaire totale de diphénols et d'esters d'acides bis-halogénocarboniques des diols II,

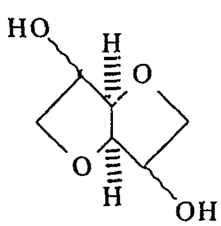

(II)

des diols de formule II sous la forme de leurs esters d'acides bis-halogénocarboniques avec 50–95 moles-%, par rapport à la quantité molaire totale de diphénols et d'esters d'acides bis-halogénocarboniques des diols II, de diphénols, le cas échéant en présence d'agents de terminaison de chaîne et en utilisant, le cas échéant, le phosgène ou $COBr_2$ à des températures comprises entre 0° C et 80° C selon le procédé à l'interface entre phases.

3. Procédé de production des copolycarbonates suivant la revendication 1, caractérisé en ce qu'on fait réagir 5 à 50 moles-%, par rapport à la quantité molaire totale de diphénols et d'esters d'acides bis-halogéno-carboniques des diols II,

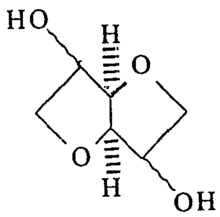

(II)

des diols de formule II sous la forme de leurs esters d'acides bis-halogénocarboniques avec 50–95 moles-%, par rapport à la quantité molaire totale de diphénols et d'esters d'acides bis-halogénocarboniques des diols II, de diphénols, éventuellement en présence d'agents de terminaison de chaîne et en utilisant éventuellement le phosgène ou $COBr_2$, à des températures comprises entre −10 et +120° en solution homogène avec addition de quantités au moins équivalentes de bases organiques tertiaires.

4. Esters d'acides bis-halogénocarboniques d'hexahydrofuro-(3.2-b)-furanne-3.6-diols de formule V

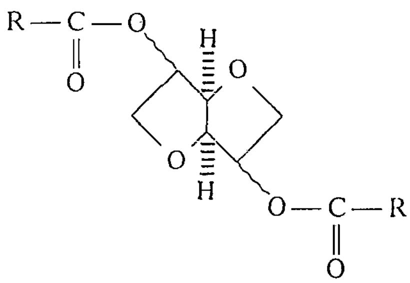

(V)

dans laquelle R représente Cl ou Br.

5. Mélanges de copolycarbonates suivant la revendication 1 avec d'autres matières thermoplastiques.

6. Mélanges de copolycarbonates suivant la revendication 1 avec d'autres polycarbonates.